# EUROPÄISCHE PATENTSCHRIFT

(11) **EP 1 155 207 B1**
(45) Veröffentlichungstag und Bekanntmachung des Hinweises auf die Patenterteilung: **10.03.2004**
(21) Anmeldenummer: 00901090.1
(22) Anmeldetag: 12.01.2000
(51) Int. Cl.: E05B 49/00

(54) **SCHLÜSSELLOSE ZUGANGSKONTROLLEINRICHTUNG FÜR KRAFTFAHRZEUGE SOWIE VERFAHREN ZUM DURCHFÜHREN EINER SCHLÜSSELLOSEN ZUGANGSBERECHTIGUNGSKONTROLLE BEI KRAFTFAHRZEUGEN**
KEYLESS ACCESS CONTROL SYSTEM FOR MOTOR VEHICLES AS WELL AS METHOD FOR CARRYING OUT A KEYLESS ACCESS AUTHORISATION CONTROL IN MOTOR VEHICLES
DISPOSITIF DE CONTROLE D'ACCES SANS CLE POUR DES VEHICULES AUTOMOBILES ET PROCEDE POUR EFFECTUER UN CONTROLE D'AUTORISATION D'ACCES SANS CLE POUR DES VEHICULES AUTOMOBILES

(30) Priorität: 25.01.1999 DE 19902797
(43) Veröffentlichungstag der Anmeldung: 21.11.2001
(73) Patentinhaber: Leopold Kostal GmbH & Co. KG, 58507 Lüdenscheid (DE)
(72) Erfinder: MINDL, Anton, D-58515 Lüdenscheid (DE); KERKMANN, Detlef, D-58769 Nachrodt (DE)
(86) Internationale Anmeldenummer: PCT/EP2000/000158
(87) Internationale Veröffentlichungsnummer: WO 2000/043622

(56) Entgegenhaltungen:
- EP-A- 0 218 251
- EP-A- 0 831 194
- DE-A- 4 228 233
- DE-A- 4 342 467
- DE-C- 19 728 761

## Beschreibung

Die Erfindung geht aus von einer Sensoreinrichtung zur Erfassung einer physikalischen Meßgröße mit einem Ausgang, über den der gemessene Wert als digital oder analog codiertes Signal ausgegeben wird.
Die Erfindung bezieht sich auf das Gebiet schlüsselloser Zugangskontrolleinrichtungen. Insbesondere betrifft die Erfindung eine schlüssellose Zugangskontrolleinrichtung für Kraftfahrzeuge mit einer dem Kraftfahrzeug zugeordneten Sende-Empfangseinrichtung und mit einem mobilen Transponder, welche Sende-Empfangseinrichtung zumindest einen im induktiven Frequenzbereich arbeitenden Sender (NF-Sender) zum Aussenden eines niederfrequenten Codesignals (NF-Signal) und eine im Hochfrequenzbereich (HF-Bereich) arbeitende Sende-Empfangseinheit umfaßt und welcher Transponder einen Empfänger zum Empfangen des NF-Signals und eine HF-Sende-Empfangseinheit umfaßt, wobei die HF-Sende-Empfangseinheiten zur Durchführung eines die Zugangsberechtigung überprüfenden, bidirektionalen Frage-Antwort-Dialogs vorgesehen sind.

Ferner betrifft die Erfindung ein Verfahren zum Durchführen einer schlüssellosen Zugangsberechtigungskontrolle bei Kraftfahrzeugen.

Eine derartige Vorrichtung und ein derartiges Verfahren sind aus den Aufsätzen "Ein Fahrzeugsicherungssystem ohne mechanischen Schlüssel" von Ch. Schneider und U. Schrey, erschienen in: "Automobiltechnische Zeitschrift 96" (1994) Nr. 5 sowie "Smart-Card - Abschied vom Autoschlüssel" von U. Schrey, Ch. Schneider und M. Siedentrop, erschienen in: "Siemens-Zeitschrift 1/96" bekannt. Die in diesen Dokumenten beschriebene Zugangskontrolleinrichtung besteht im wesentlichen aus einer dem Kraftfahrzeug zugeordneten Sende-Empfangseinrichtung und aus einem mobilen Transponder. Die Sende-Empfangseinrichtung umfaßt drei im induktiven Frequenzbereich arbeitende Sender (NF-Sender), von denen jeweils einer der Fahrertür, ein weiterer der Beifahrertür und der dritte dem Fahrzeugheck zugeordnet sind. Die Sendeantennen der NF-Sender sind in die jeweiligen Seitentüren bzw. in die hintere Stoßstange integriert. Jeder NF-Sender ist mit dem der jeweiligen Tür zugeordneten Türgriff bzw. Kofferraumtaste dergestalt verbunden, daß beim Betätigen eines solchen der diesem Fahrzeugbereich zugeordnete NF-Sender ein niederfrequentes Codesignal (NF-Signat) aussendet. Die übrigen NF-Sender verbleiben dagegen ruhig und senden keine NF-Signale aus.

DE-A-4 342 467 beschreibt ein Kennkarten-System zum Öffnen eines damit verbundenen Schlosses über Fernsteuerung. Das System besteht aus einem mit dem Schloß verbundenen Hauptautomat und einer Karte. Der Hauptautomat umfaßt einen niederfrequent arbeitenden Sender und eine im Hochfrequenzbereich arbeitende Sende-Empfangseinheit, die Kennkarte umfaßt einen Empfänger zum Empfangen des NF-Signals, einen Konverter und eine HF-Sende-Empfangseinheit. Der Hauptautomat ist elektrisch und mechanisch mit dem Schloß verbunden. Im Konverter wird das vom NF-Empfänger empfangene Signal in eine Gleichspannung und ein Codesignal umgewandelt. Der HF-Sender in der Kennkarte sendet aufgrund der Gleichspannung und des Codesignals ein zweites Signal. Das zweite Signal erreicht den HF-Empfänger des Hauptautomats, der durch dieses Signal ein drittes erzeugt, das zur Entriegelung des Schlosses benutzt wird.

EP-A-0 218 251 beschreibt eine Zugangskontrolleinrichtung für Kraftfahrzeuge mit einem dem Fahrzeug zugeordneten Transponder. Bei Betätigung der Handhabe wird der Fahrzeug-Transponder aktiviert und sendet ein HF-Fragecodesignal zu einem mobilen Transponder. Der mobile Transponder erzeugt ein Antwortcodesignal, das im Fahrzeug mit einem gespeicherten Code verglichen wird. Bei Übereinstimmung wird ein Entsicherungssignal and die Zugangskontrolleinrichtung gesendet.

DE-C-19 728 761 beschreibt eine Zugangskontrolleinrichtung, bei der mehrere NF- Sender eingesetzt sind. Der mobile Transponder, der sowohl einen NF-Empfänger als auch eine HF-Sende-Empfangseinheit umfaßt, wird durch einen der NF-Sender geweckt und tritt daraufhin in einen die Zugangsberechtigung überprüfenden Frage-Antwort-Dialog mit der dem Kfz zugeordneten Sende-Empfangs-Einrichtung ein, der nach erfolgreicher Abwicklung zum Entriegeln einer Fahrzeugtür führt.

Die dem Kraftfahrzeug zugeordnete Sende-Empfangseinrichtung ist ferner mit einem HF-Empfänger zum Empfangen eines HF-Signals des Transponders ausgerüstet. Das in dem HF-Empfänger empfangene Antwortsignal des Transponders beaufschlagt ein mit einem Prozessor ausgestattetes Steuergerät, in welchem das empfangene Antwortsignal, welches als Kryptocode empfangen worden ist, entschlüsselt und auf seine Gültigkeit hin überprüft wird. Wird eine Übereinstimmung festgestellt, wird ein entsprechendes Steuersignal an den jeweiligen Türverriegelungsmechanismus zum Entriegeln derjenigen Türe gegeben, deren Türgriff zuvor betätigt worden ist.

Als Transponder ist eine sogenannte Zugangskarte mit einem NF-Empfänger und einem HF-Sender kleiner Leistung vorgesehen. Die induktive Empfangsantenne ist als Rahmenantenne, die hochfrequent strahlende Sendeantenne als Leiterplattenantenne ausgeführt. Das von dem NF-Empfänger des Transponders empfangene NF-Signal wird in dem Transponder decodiert. Anschließend verrechnet ein dem Transponder zugeordneter Mikroprozessor das in dem NF-Signal enthaltene Codewort mit einem Sicherheitsalgorithmus und sendet das Ergebnis mittels der HF-Sende-Einheit an den HF-Empfänger der dem Kraftfahrzeug zugeordneten Sende-Empfangseinrichtung.
Durch die Versendung von NF-Signalen zum "Wecken" des Transponders ist durch das rasch abnehmende magnetische Feld eine Funktionsradiusbegrenzung vorgegeben. Ein Empfang des ausgesendeten NF-Signals ist lediglich innerhalb eines Funktionsradius von 1,5 bis 2 Metern möglich. Dadurch wird gewährleistet, daß nur diejenigen Transponder von dem betätigten NF-Sender geweckt werden, die sich tatsächlich in diesem Nahfeld befinden. Durch die notwendige Betätigung eines Türgriffes bzw. einer Kofferraumtaste und der Begrenzung des Funktionsradiusses erfolgt eine eindeutige Lokalisierung des Transponders bzw. der den Transponder tragenden Person.

Zum Ermöglichen eines möglichst raschen Entriegelns der jeweiligen Kraftfahrzeugtür werden modifizierte Türgriff- und Schloßmechaniken eingesetzt, die ein sofortiges Aufspringen des Einstieges, an welchem der Griff gezogen wurde, ermöglichen. Selbst durch Vorsehen derartiger Mechaniken ist es nicht möglich, diejenige Zeit, welche die zum Transport der vom NF-Sender zum Transponder übersandten Daten benötigen, abzukürzen. Dies gilt insbesondere wenn auf dieser Niederfrequenzstrecke kompliziert aufgebaute Kryptocodes übermittelt werden sollen, da ein solches Vorgehen aufgrund der geringen Datenübertragungsgeschwindigkeit eine gewisse Zeitdauer in Anspruch nimmt. Das Übermitteln des decodierten Antwortsignals des Transponders an den HF-Empfänger verzögert den Beginn der Türentriegelung dagegen nur geringfügig.

Eine weitere schlüssellose Zugangskontrolleinrichtung für Fahrzeuge ist aus der DE 43 29 697 C2 bekannt. Diese Vorrichtung verwendet einen zentralen NF-Sender zum Aussenden des niederfrequenten Codesignals. Bei dieser Vorrichtung ist jedoch vorgesehen, daß der NF-Sender zyklisch in gewissen Zeitabständen NF-Signale aussendet. Nur wenn sich der dem Kraftfahrzeug zugeordnete Transponder in dem Funktionsradius des NF-Senders befindet, wird dieser geweckt und sendet sein Antwortsignal zurück. Bei dieser Vorrichtung ist es zum Auslösen des Entriegelungsmechanismus nicht notwendig, einen Türgriff oder eine Kofferraumtaste betätigen zu müssen. Da eine Lokalisierung des Transponders zum Entriegeln lediglich bestimmter Türen gemäß dieser Vorrichtung nicht möglich ist, eignet sich diese Zugangskontrolleinrichtung allein für Kraftfahrzeuge mit einer Zentralverriegelung. Auch bei dieser vorbekannten Zugangskontrolleinrichtung erfolgt mitunter eine zeitversetzte Entriegelung bedingt durch die Übertragüngsdauer des unter Umständen kompliziert aufgebauten NF-Signals.

Ferner ist eine schlüssellose Zugangskontrolleinrichtung in der DE 197 28 761 C1 beschrieben, bei der wiederum mehrere NF-Sender eingesetzt sind, die jeweils bestimmten Fahrzeugbereichen zugeordnet sind und jeweils ein sich von den anderen NF-Sendern unterscheidendes Signal aussenden. Der mobile Transponder, der sowohl einen NF-Empfänger als auch eine HF-Sende-Empfangseinheit umfaßt, wird durch einen der NF-Sender geweckt und tritt daraufhin in einen die Zugangsberechtigung überprüfenden Frage -Antwort-Dialog mit der dem Kfz zugeordneten Sende-Empfangs-Einrichtung ein, der nach erfolgreicher Abwicklung zum Entriegeln der entsprechenden Fahrzeugtür führt.
Dem hierbei erzielten Vorteil, daß keine Betätigung eines Türgriffs erforderlich ist, um die Kommunikation zwischen Fahrzeug und Transponder zu starten, und daß somit keine merkliche Verzögerung zwischen Betätigung des Griffs und Entriegelung der Tür auftritt, steht bei dieser Einrichtung der Nachteil entgegen, daß beim Aufenthalt des berechtigten Nutzers in der Nähe des Fahrzeugs eine unbeabsichtigte Entriegelung der Tür(en) erfolgen kann.

Ausgehend von dem eingangs diskutierten Stand der Technik liegt der Erfindung daher die Aufgabe zugrunde, eine schlüssellose Zugangskontrolleinrichtung für Kraftfahrzeuge sowie ein Verfahren zum Durchführen einer schlüssellosen Zugangsberechtigungskontrolle bei Kraftfahrzeugen vorzuschlagen, die nicht nur zum Entriegeln einzelner Türen oder Klappen geeignet ist, wobei auch ein Austausch kompliziert aufgebauter Code- und Antwortsignale ohne eine spürbare Verzögerung des Entriegelungsvorganges möglich ist, sondern bei der auch eine unbeabsichtigte Entriegelung der Fahrzeugtüren wirksam verhindert ist.

Diese Aufgabe wird zu einem dadurch gelöst, daß die Zugangskontrolleinrichtung eine Steuervorrichtung umfaßt, die mit zumindest einem dem Kraftfahrzeug zugeordneten Bedienelement kooperiert, und durch ein von dem Transponder nach Empfang des NF-Signals ausgesandtes erstes HF-Antwortsignal in einen Status versetzt ist, in dem das zumindest eine Bedienelement durch den Nutzer des Kraftfahrzeugs betätigbar ist und sich in Wirkverbindung mit einem mechanisch dem Bedienelement und elektrisch der Steuervorrichtung zugeordneten elektrischen Schalter befindet.

Ferner wird diese Aufgabe erfindungsgemäß durch ein Verfahren zum Durchführen einer schlüssellosen Zugangsberechtigungskontrolle bei Kraftfahrzeugen umfassend die folgenden Schritte gelöst:
- Aussenden von codierten NF-Signalen, die im induktiven Frequenzbereich liegen, von zumindest einem dem Kraftfahrzeug zugeordneten NF-Sender
- Starten einer dem Kraftfahrzeug zugeordneten HF-Sende-Empfangseinheit,
- Empfangen und Erkennen des NF-Signals mit einem Transponder
- Starten einer dem Transponder zugeordneten HF-Sende-Empfangseinheit,
- Aussenden eines codierten HF-Antwortsignals durch den Transponder
- Empfangen und Erkennen des HF-Antwortsignals durch die Sende-Empfangseinheit des Kraftfahrzeugs
- Freigeben der der Steuervorrichtung des Kraftfahrzeugs elektrisch zugeordneten Schalter und der diesen mechanisch zugeordneten Bedienelemente
- Betätigen zumindest eines der Bedienelemente durch den Nutzer
- Durchführen eines bidirektionalen Frage-Antwort-Dialogs auf der HF-Strecke zwischen der Sende-Empfangseinheit des Kraftfahrzeugs und derjenigen des Transponders, welcher Dialog das Aussenden eines Kryptocodes von dem Transponder an die im Kraftfahrzeug angeordnete HF-Sende-Empfangseinheit beinhaltet,
- Erkennen des Kryptocodes durch die Sende-Empfangseinrichtung und
- Öffnen einer oder mehrere Türverriegelungen, die derjenigen oder denjenigen Türe(n) entsprechen, denen das betätigte Bedienelement zugeordnet ist.

Das vom Fahrzeug ausgesandte NF-Signal dient lediglich dem sog. "Wecken" des Transponders bei der Annäherung des berechtigten Benutzers an sein Kfz. Das daraufhin von der Sende-Empfangs-Einheit des Transponders ausgesandte erste codierte HF-Antwortsignal dient einer vorläufigen, mit einem relativ geringen Sicherheitsbedarf versehenen Verifikation der Nutzungsberechtigung, die zu einer Freigabe der der Steuervorrichtung des Fahrzeugs zugeordneten Schalter und der diesen mechanisch zugeordneten Bedienelemente führt.
Erst die Betätigung eines dieser Bedienelemente löst den eigentlichen, mit einem hohen Sicherheitsstandard durchzuführenden Frage-Antwort-Dialog zwischen der dem Kraftfahrzeug zugeordneten Sende-Empfangseinrichtung und dem Transponder aus. Dieser erfolgt auf einer HF-Strecke, wobei sowohl die im Kraftfahrzeug befindliche Sende-Empfangseinrichtung als auch der Transponder eine HF-Sende-Empfangseinheit aufweisen. Durch Verwendung einer HF-Strecke zum Übermitteln der eigentlichen, zur Identifizierung vorgesehenen Signale ist es möglich, auch kompliziert aufgebaute Kryptocodes zwischen den beiden Einheiten zu übersenden, ohne daß dieses für einen Benutzer spürbar zu einer Verzögerung des Entriegelungsmechanismus führt. Diese Maßnahme erhöht maßgeblich die Systemsicherheit. Diese wird auch dadurch erhöht, daß der Frage-Antwort-Dialog auf der HF-Strecke nur dann stattfindet, wenn der durch die vorgeschaltete Grobverifikation als mutmaßlich berechtigt identifizierte Benutzer durch die Betätigung eines Türgriffs seinen Wunsch, das Fahrzeug zu öffnen, bekundet hat. Durch diese Aktion des Benutzers wird gleichzeitig auch die zu öffnende Tür identifiziert, sofern nicht ohnehin eine andere Entriegelung - z.B. im Sinne einer zentralen Entriegelung - gewünscht ist.

Die nach einer erfolgreich verlaufenen, vorläufigen Identifizierung des mutmaßlich berechtigten Benutzers vorgesehene Realisierung des Betriebszustandes der von der Zugangskontrolleinrichtung umfaßten Steuervorrichtung, in dem das zumindest eine Bedienelement durch den Nutzer des Kraftfahrzeugs betätigbar ist und sich in Wirkverbindung mit einem mechanisch dem Bedienelement und elektrisch der Steuervorrichtung zugeordneten elektrischen Schalter befindet, kann durch die unterschiedlichsten mechanischen und/oder elektrischen Maßnahmen erfolgen.

So ist z.B. vorgesehen, die Wirkverbindung zwischen dem zumindest einen Bedienelement, bei dem es sich insbesondere um einen Türgriff des Fahrzeugs handelt, und dem diesem mechanisch zugeordneten, elektrischen Schalter durch ein zumindest zwischen den zwei Positionen "Wirkverbindung gegeben" und "Wirkverbindung nicht gegeben" verstellbares, mechanisches Bindeglied zu realisieren.
Alternativ dazu kann aber auch die Bewegung des Bedienelements vor der vorläufigen Identifizierung mechanisch blockiert oder durch eine bewegliche Abdeckung verhindert werden.

Vorteilhaft ist außerdem vorgesehen, daß zur Verstellung der mechanischen Elemente zur Ineingriffnahme, Blockierung und/oder Abdeckung des zumindest einen Bedienelements zwischen den von ihnen einnehmbaren Positionen elektromotorische Antriebe eingesetzt sind.

Als elektrische Maßnahme ist z.B. die Beaufschlagung des der Steuervorrichtung zugeordneten, vor der vorläufigen Identifizierung spannungslosen Schalters mit einer Betriebsspannung vorgesehen.

Weitere Vorteile der Erfindung ergeben sich aus den übrigen Unteransprüchen sowie aus der nachfolgenden Beschreibung eines bevorzugten Ausführungsbeispieles. Es zeigen:
- **Fig. 1:**: eine schematisierte Darstellung einer schlüssellosen Zugangskontrolleinrichtung für Kraftfahrzeuge,
- **Fig. 2:**: ein Flußdiagramm eines Frage-Antwort-Dialoges zur Identifizierung der Zugangsberechtigung zwischen einer in einem Kraftfahrzeug angeordneten Sende-Empfangseinrichtung und einem mobilen Transponder

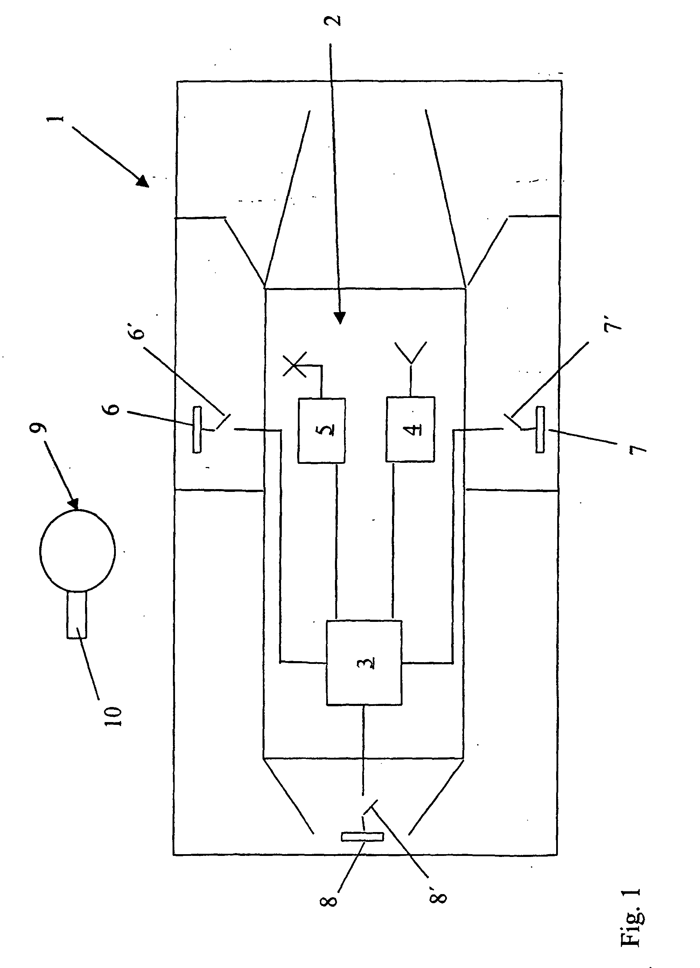

In Figur 1 ist schematisiert ein Kraftfahrzeug 1 dargestellt, welches mit einer schlüssellosen Zugangskontrolleinrichtung ausgestattet ist. Die Zugangskontrolieinrichtung besteht aus einer im Kraftfahrzeug 1 angeordneten Steuervorrichtung 3, an die eine Sende-Empfangseinrichtung 2 sowie über entsprechende Leitungen die mit den Türgriffen 6,7,8 kooperierenden elektrischen Schalter 6',7',8' angeschlossen sind. Die Sende- und Empfangseinrichtung 2 umfaßt zumindest einen im induktiven Frequenzbereich arbeitenden Sender (NF-Sender) 4 sowie eine HF-Sende-Empfangseinheit 5. Der NF-Sender 4 dient zum Aussenden von NF-Codesignalen, für die zweckmäßigerweise eine Frequenz zwischen 1 und 25 kHz gewählt wird. Durch entsprechende Ausgestaltung der Antenne ist es möglich, weitestgehend den magnetischen Anteil der elektromagnetischen Wellen zu benutzen; diese werden in dem genannten Frequenzbereich weder vom menschlichen Körper noch von der Fahrzeugkarosserie wesentlich gedämpft. Die Intensität des NF-Signals ist so bemessen, daß der Funktionsradius auf wenige Meter begrenzt ist.

Die Sende-Empfangseinheit 5 dient zum Empfang eines HF-Antwort-Signals sowie zum Durchführen eines Frage-Antwort-Dialogs mit einem mobilen Transponder 9. Der Transponder 9 umfaßt einen NF-Empfänger, dessen Antenne eine Ferritkernantenne 10 ist. Der NF-Empfänger dient zum Empfangen von NF-Codesignalen der Sende-Empfangseinrichtung 2. Der NF-Empfänger des Transponders 9 ist mit seinem Ausgang an den Eingang eines Mikroprozessors angeschlossen, durch den nach Empfang eines NF-Signals eine dem Transponder 9 zugeordnete HF-Sende-Empfangseinheit gestartet wird. Zur Spannungsversorgung enthält der Transponder 9 eine nicht näher dargestellte wiederaufladbare Batterie, beispielsweise eine Lithium-lonen Batterie.

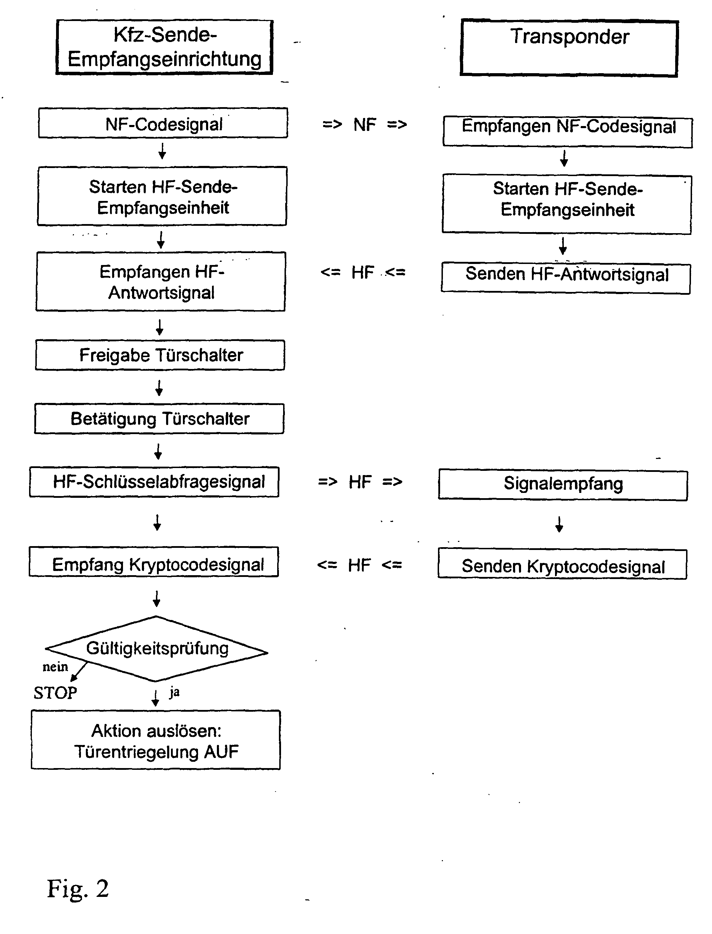

Eine schlüssellose Zugangsberechtigungskontrolle gemäß der in Figur 1 dargestellten Zugangskontrolleinrichtung funktioniert wie folgt, wobei auf das Flußdiagramm der Figur 2 Bezug genommen ist:
Der NF-Sender 4 sendet ein codiertes NF-Signal aus, das von dem sich dem Kraftfahrzeug 1 nähernden Transponder 9, den eine berechtigte Person beispielsweise in der Jackentasche trägt, empfangen wird und das zum "Wecken" des Transponders 9 dient.
Der Transponder 9 erkennt das NF-Codesignal, startet die ihm zugeordnete HF-Sende-Empfangseinheit und sendet ein codiertes HF-Antwortsignal aus.

Gleichzeitig mit dem zyklischen Aussenden des NF-Codesignals wird die HF-Sende-Empfangseinheit 5 der im Kraftfahrzeug 1 angeordneten Sende-Empfangseinrichtung 2 gestartet. Das vom Transponder 9 ausgesandte, codierte HF-Antwortsignal wird von der HF-Sende-Empfangseinheit 5 im Kraftfahrzeug 1 empfangen. Der empfangene Code wird überprüft und bei einem positiven Resultat dieser Überprüfung werden durch die Steuervorrichtung 3 die elektrischen Schalter 6', 7', 8' sowie die mit diesen kooperierenden Türgriffe 6, 7, 8 freigegeben. Diese Freigabe erfolgt z.B. dadurch, daß die Türgriffe 6, 7, 8 durch das Zurückfahren diese bis dahin verbergender Abdeckungen dem Benutzer zugänglich gemacht werden, oder daß die Türgriffe 6, 7, 8 erst zu diesem Zeitpunkt mechanisch in Eingriff mit den diesen zugeordneten elektrischen Schaltern 6', 7', 8' gebracht oder von ihre Bewegung verhindernden Sperreinrichtungen befreit werden.
Durch die Betätigung eines der Türgriffe durch den Benutzer wird der bidirektionale Frage-Antwort-Dialog auf der HF-Strecke zwischen der HF-Sende-Empfangseinheit 5 im Kraftfahrzeug und derjenigen des Transponders 9 in Gang gesetzt, welcher das Vorliegen der Zugangsberechtigung überprüft. Dabei wird das von der HF-Sende-Empfangseinheit 5 empfangene Antwortsignal des Transponders 9 entschlüsselt und mit einem Sollwert oder mit mehreren Sollwerten verglichen, woraufhin die Zugangsberechtigung der den Transponder tragenden Person festgestellt wird. Bei Empfang eines gültigen Antwort-Code-Signales erfolgt durch die Steuervorrichtung 3 ein in diesem Ausführungsbeispiel an die Fahrzeugtür, deren Griff betätigt wurde, gerichtetes Auslösesignal zum Entriegeln derselben.

In dem Kraftfahrzeug 1 ist an geeigneter Stelle eine Transponderaufnahme angeordnet, in die der Transponder 9 mit seiner Ferritkernantenne 10 einsetzbar ist. Dieser Transponderaufnahme ist eine induktive Ladeeinrichtung zugeordnet, so daß die wiederaufladbare Batterie des Transponders 9 beim Benutzen des Kraftfahrzeugs 1 aufgeladen wird. Der Transponderaufnahme ist darüber hinaus eine weitere Einrichtung zum Durchführen von Frage-Antwort-Dialogen zugeordnet, die entsprechend dem oben beschriebenen Frage-Antwort-Dialog ablaufen, jedoch mit dem Ziel, nunmehr eine Wegfahrsperre auszuschalten und/oder andere Sicherheits- oder Betriebszustände abzufragen bzw. zu starten.

## Patentansprüche

1. Schlüssellose Zugangskontrolleinrichtung für Kraftfahrzeuge mit einer dem Kraftfahrzeug (1) zugeordneten Sende-Empfangseinrichtung (2) und mit einem mobilen Transponder (9), welche Sende-Empfangseinrichtung (2) zumindest einen im induktiven Frequenzbereich arbeitenden Sender (4) (NF-Sender) zum Aussenden eines niederfrequenten Codesignals (NF-Signal) und eine im Hochfrequenzbereich (HF-Bereich) arbeitende Sende-Empfangseinheit (5) umfaßt und welcher Transponder (9) einen Empfänger zum Empfangen des NF-Signals und eine HF-Sende-Empfangseinheit umfaßt, wobei die HF-Sende-Empfangseinheiten zur Durchführung eines die Zugangsberechtigung überprüfenden bidirektionalen Frage-Antwort -Dialogs vorgesehen sind, **dadurch gekennzeichnet, daß** die Zugangskontrolleinrichtung außerdem eine Steuervorrichtung (3) umfaßt, die mit zumindest einem dem Kraftfahrzeug (1) zugeordneten Bedienelement (6,7,8) kooperiert, und durch ein von dem Transponder (9) nach Empfang des NF-Signals ausgesandtes erstes HF-Antwortsignal in einen Status versetzt ist, in dem das zumindest eine Bedienelement (6,7,8) durch den Nutzer des Kraftfahrzeugs betätigbar ist und sich in Wirkverbindung mit einem mechanisch dem Bedienelement (6,7,8) und elektrisch der Steuervorrichtung (3) zugeordneten elektrischen Schalter (6',7',8') befindet.

2. Zugangskontrolleinrichtung nach Anspruch 1, **dadurch gekennzeichnet, daß** die Wirkverbindung zwischen dem zumindest einen Bedienelement (6,7,8) und dem ihm mechanisch zugeordneten, elektrischen Schalter (6',7',8') durch ein zumindest zwischen den zwei Positionen "Wirkverbindung gegeben" und "Wirkverbindung nicht gegeben" verstellbares, mechanisches Bindeglied realisiert ist.

3. Zugangskontrolleinrichtung nach Anspruch 1 oder 2, **dadurch gekennzeichnet, daß** die zur Betätigung des zumindest einen Bedienelements (6,7,8) erforderliche Bewegung wahlweise mechanisch blockierbar ist.

4. Zugangskontrolleinrichtung nach einem der Ansprüche 1 bis 3, **dadurch gekennzeichnet, daß** dem zumindest einen Bedienelement (6,7,8) eine bewegliche, mechanische Abdeckung zugeordnet ist, mit der dieses gegen Betätigung schützbar ist.

5. Zugangskontrolleinrichtung nach einem der Ansprüche 1 bis 4, **dadurch gekennzeichnet, daß** zur Verstellung der mechanischen Elemente zur Ineingriffnahme, Blockierung und/oder Abdeckung des zumindest einen Bedienelements (6,7,8) zwischen den von ihnen einnehmbaren Positionen elektromotorische Antriebe eingesetzt sind.

6. Zugangskontrolleinrichtung nach einem der Ansprüche 1 bis 5, **dadurch gekennzeichnet, daß** das zumindest eine Bedienelement (6,7,8) durch einen Türgriff des Kraftfahrzeugs gebildet ist.

7. Verfahren zum Durchführen einer schlüssellosen Zugangsberechtigungskontrolle bei Kraftfahrzeugen umfassend die folgenden Schritte:
- Aussenden von codierten NF-Signalen, die im induktiven Frequenzbereich liegen, von zumindest einem dem Kraftfahrzeug zugeordneten NF-Sender
- Starten einer dem Kraftfahrzeug zugeordneten HF-Sende-Empfangseinheit,
- Empfangen und Erkennen des NF-Signals mit einem Transponder
- Starten einer dem Transponder zugeordneten HF-Sende-Empfangseinheit,
- Aussenden eines codierten HF-Antwortsignals durch den Transponder
- Empfangen und Erkennen des HF-Antwortsignals durch die Sende-Empfangseinheit des Kraftfahrzeugs
- Freigeben der der Steuervorrichtung des Kraftfahrzeugs elektrisch zugeordneten Schalter und der diesen mechanisch zugeordneten Bedienelemente
- Betätigen zumindest eines der Bedienelemente durch den Nutzer
- Durchführen eines bidirektionalen Frage-Antwort-Dialogs auf der HF-Strecke zwischen der Sende-Empfangseinheit des Kraftfahrzeugs und derjenigen des Transponders, welcher Dialog das Aussenden eines Kryptocodes von dem Transponder an die im Kraftfahrzeug angeordnete HF-Sende-Empfangseinheit beinhaltet,
- Erkennen des Kryptocodes durch die Sende-Empfangseinrichtung und
- Öffnen einer oder mehrere Türverriegelungen, die derjenigen oder denjenigen Türe(n) entsprechen, denen das betätigte Bedienelement zugeordnet ist.

8. Verfahren nach Anspruch 7, **dadurch gekennzeichnet, daß** das Freigeben der der Steuervorrichtung des Kraftfahrzeugs zugeordneten Schalter und der diesen mechanisch zugeordneten Bedienelemente die Beaufschlagung der im nicht freigegebenen Zustand spannungslosen Schalter mit einer Betriebsspannung umfaßt.

9. Verfahren nach Anspruch 7 oder 8, **dadurch gekennzeichnet, daß** das Freigeben der der Steuervorrichtung des Kraftfahrzeugs zugeordneten Schalter und der diesen mechanisch zugeordneten Bedienelemente das Herstellen einer Wirkverbindung zwischen den Bedienelementen und den diesen zugeordneten Schaltern umfaßt.

10. Verfahren nach einem der Ansprüche 7 bis 9, **dadurch gekennzeichnet, daß** das Freigeben der der Steuervorrichtung des Kraftfahrzeugs zugeordneten Schalter und der diesen mechanisch zugeordneten Bedienelemente das selbsttätige Entfernen eines mechanisch die Bewegung der Bedienelemente blockierenden und/oder den Zugriff auf dieselben verwehrenden Elements umfaßt.

## Claims

1. Keyless access control facility for motor vehicles with a transceiver device (2) allocated to the motor vehicle (1) and with a mobile transponder (9), which transceiver device (2) comprises at least one transmitter (4) (LF transmitter) functioning in the inductive frequency range for sending out a low-frequency code signal (LF signal) and a transceiver unit (5) functioning in the high-frequency range (HF range), and which transponder (9) comprises a receiver for receiving the LF signal and an HF transceiver unit, with the HF transceiver units provided for the purpose of conducting a bidirectional question-answer dialogue for controlling the access authorization, **characterized by** the fact that the access control facility additionally comprises controlling equipment (3) which cooperates with at least one operating element (6,7,8) allocated to the motor vehicle (1) and, as a result of an initial HF answer signal sent out by the transponder (9) upon receiving the LF signal, is set in a state in which the at least one operating element (6,7 8) can be activated by the user of the motor vehicle and is in a effective connection with an electrical switch (6',7',8') assigned mechanically to the operating element (6,7,8) and electrically to the controlling equipment (3).

2. Access control facility in accordance with Claim 1, **characterized by** the fact that the effective connection between the at least one operating element (6,7,8) and the electrical switches (6',7',8') mechanically assigned to it is realized by an adjustable mechanical link at least between the two positions "effective connection established" and "effective connection not established".

3. Access control facility in accordance with Claim 1 or Claim 2, **characterized by** the fact that the movement required to actuate the at least one operating element (6,7,8) can optionally be mechanically blocked.

4. Access control facility in accordance with any of Claims 1 to 3, **characterized by** the fact that a movable mechanical covering is allocated to the at least one operating element (6,7,8) with which this can be protected against actuation.

5. Access control facility in accordance with any of Claims 1 to 4, **characterized by** the fact that, for the purpose of adjusting the mechanical elements for engaging, blocking and/or covering the at least one operating element (6,7,8), electromotive drives are utilized between the positions which can be adopted by the same.

6. Access control facility in accordance with any of Claims 1 to 5, **characterized by** the fact that the at least one operating element (6,7,8) is constituted by a door handle of the motor vehicle.

7. Procedure for conducting a keyless authorized access control for motor vehicles, which encompasses the following steps:
- Emission of coded LF signals lying within the inductive frequency range by at least one LF transmitter allocated to the vehicle,
- Starting of an HF transceiver unit allocated to the motor vehicle,
- Receiving and recognition of the LF signal with a transponder,
- Starting of an HF transceiver unit allocated to the transponder,
- Emission of a coded HF answer signal by the transponder,
- Receiving and recognition of the HF answer signal by the transceiver unit of the motor vehicle,
- Release of the switches allocated electrically to the controlling equipment of the vehicle and of the operating elements allocated mechanically to the same,
- Actuation of at least one of the operating elements by the user,
- Conducting a bidirectional question-answer dialogue on the HF route between the transceiver unit of the vehicle and that of the transponder, which dialogue includes the emission of a cryptocode from the transponder to the HF transceiver unit located in the vehicle,
- Recognition of the cryptocode by the transceiver device, and
- Opening of one or more door locks corresponding with that or those door(s) to which the actuated operating element is allocated.

8. Procedure in accordance with Claim 7, **characterized by** the fact that the release of the switches allocated to the controlling equipment of the motor vehicle and of the operating elements mechanically allocated to the same encompasses the application of an operating voltage to the switch, which is deenergized in its unreleased state.

9. Procedure in accordance with Claim 7 or Claim 8, **characterized by** the fact that the release of the switches allocated to the controlling equipment of the motor vehicle and of the operating elements mechanically allocated to the same encompasses the establishment of an effective connection between the operating elements and the switches allocated to the same.

10. Procedure in accordance with any of Claims 7 to 9, **characterized by** the fact that the release of the switches allocated to the controlling equipment of the motor vehicle and of the operating elements mechanically allocated to the same encompasses the automatic removal of an element which mechanically blocks the movement of the operating elements and/or prevents access to the same.

## Revendications

1. Dispositif de contrôle d'accès sans clé pour véhicules automobiles, avec un dispositif d'émission-réception (2), qui est associé audit véhicule automobile (1), et avec un transpondeur mobile (9), lequel dispositif d'émission-réception (2) comprend, au moins, un émetteur (4), qui fonctionne dans une gamme de basses fréquences inductive (émetteur B.F.) pour l'émission d'un signal de code à basse fréquence (signal B.F.), et une unité d'émission-réception (5), qui travaille dans une gamme de hautes fréquences (gamme H.F.), et ledit transpondeur (9) comprenant un récepteur pour la réception du signal B.F. et une unité d'émission-réception H.F., les unités d'émission-réception H.F. étant prévues pour l'établissement d'un dialogue question-réponse bidirectionnel qui contrôle l'autorisa-tion d'accès, **caractérisé en ce que** le dispositif de contrôle d'accès comprend, en outre, un dispositif de commande (3) qui coopère avec au moins un élément de commande (6, 7, 8) coordonné audit véhicule automobile (1) et est mis, par un premier signal réponse H.F., émis par le transpondeur (9) après réception du signal B.F., dans un état dans lequel au moins un élément de commande (6, 7, 8) peut être actionné par l'utilisateur du véhicule automobile, et se trouve en coopération avec un commutateur électrique (6', 7', 8') coordonné mécaniquement audit élément de commande (6, 7, 8) et électriquement audit dispositif de commande (3).

2. Dispositif de contrôle d'accès selon la revendication 1, **caractérisé en ce que** la coopération entre au moins un élément de commande (6, 7, 8) et le commutateur électrique (6', 7', 8') est réalisée par un organe de liaison mécanique déplaçable, au moins, entre les deux positions « coopération établie » et « coopération non établie ».

3. Dispositif de contrôle d'accès selon la revendication 1 ou 2, **caractérisé en ce que** le mouvement nécessaire à l'actionnement d'au moins un élément de commande (6, 7, 8) peut être bloqué mécaniquement, à volonté.

4. Dispositif de contrôle d'accès selon l'une des revendication 1 à 3, **caractérisé en ce qu**'un couvercle mécanique, mobile est associé à au moins un élément de commande (6, 7, 8) qu'il peut protéger contre tout actionnement.

5. Dispositif de contrôle d'accès selon l'une des revendication 1 à 4, **caractérisé en ce qu**'un entraînement par moteur électrique est prévu pour déplacer les éléments mécaniques entre les positions à prendre par eux, en vue de l'entrée en prise, du blocage et / ou du recouvrement d'au moins l'un des éléments de commande (6, 7, 8).

6. Dispositif de contrôle d'accès selon l'une des revendication 1 à 5, **caractérisé en ce qu'**un élément de commande au moins est constitué par une poignée de portière de véhicule automobile.

7. Procédé pour l'exécution d'un contrôle d'autorisation d'entrée sans clé comprenant les étapes suivantes :
- Emission de signaux B.F. codés, situés dans une gamme de fréquence inductive par, au moins, un émetteur B.F., coordonné au véhicule automobile,
- démarrage d'une unité d'émission-réception H.F., coordonnée au véhicule automobile,
- réception et reconnaissance du signal B.F. par un transpondeur,
- démarrage d'une unité d'émission-réception H.F. coordonnée u transpondeur,
- émission par le transpondeur d'un signal réponse H.F. codé,
- réception et reconnaissance du signal réponse H.F. par l'unité d'émission-réception du véhicule automobile,
- libération du commutateur cordonné électriquement au dispositif de commande du véhicule automobile et des éléments de commande y coordonnés mécaniquement,
- actionnement d'au moins l'un des éléments de commande par l'utilisateur,
- exécution d'un dialogue bidirectionnel demande-réponse sur le parcours H.F. entre l'unité d'émission-réception du véhicule automobile et de celle d transpondeur, ledit dialogue comprenant l'émission d'un crytocode du transpondeur à l'unité d'émission-réception H.F. coordonnée au véhicule automobile,
- reconnaissance du cryptocode par le dispositif d'émission-réception et
- déverrouillage d'une ou de plusieurs portière/s à laquelle /auxquelles l'élément de commande actionné est coordonné.

8. Procédé selon la revendication 7, **caractérisé en ce que** la libération des commutateurs, coordonnés au dispositif de commande du véhicule automobile, et des éléments de commande, coordonnés mécaniquement à ceux-ci, comprend la mise sous tension de service des commutateurs qui sont hors tension à l'état non libéré.

9. Procédé selon la revendication 7 ou 8 **caractérisé en ce que** la libération des commutateurs, coordonnés au dispositif de commande du véhicule automobile, et des éléments de commande, coordonnés mécaniquement à ceux-ci, comprend la réalisation d'une coopération entre les éléments et les commutateurs associés à ceux-ci.

10. Procédé selon l'une des revendications 7 à 9, **caractérisé en ce que** la libération des commutateurs, coordonnés au dispositif de commande du véhicule automobile, et des éléments de commande, coordonnés mécaniquement à ceux-ci, comprend l'enlèvement automatique d'un élément qui bloque mécaniquement le mouvement des éléments de commande et / ou empêche l'accès à ceux-ci.
